# EUROPEAN PATENT APPLICATION

(11) **EP 2 854 090 A1**
(43) Date of publication of application: **01.04.2015**
(21) Application number: 14183818.5
(22) Date of filing: 05.09.2014
(51) Int. Cl.: G06Q 30/02

(54) **Server, system and method for providing service using application**

(30) Priority: 30.09.2013 JP 2013202924
(71) Applicant: DeNA Co., Ltd., Tokyo 150-8510 (JP)
(72) Inventor: Mizushima, Sota, Shibuya-ku, Tokyo 150-8510 (JP); Furuhashi, Hiroki, Shibuya-ku, Tokyo 150-8510 (JP); Tsuchida, Yusuke, Shibuya-ku, Tokyo 150-8510 (JP); Yasue, Ryota, Shibuya-ku, Tokyo 150-8510 (JP)
(74) Representative: Boult Wade Tennant

(57) **Abstract**

A server according to one embodiment more appropriately sets the allocated amount of benefit for a service using an application. This server executes a program including a guidance destination identifying information transmission module for transmitting guidance destination identifying information capable of identifying a guidance-destination application; a guidance history storage module for causing guidance history information used when the user is guided to the guidance-destination application to be stored; a guidance source identifying module for identifying a guidance-source application guiding the user to the guidance-destination application used in the service; a billing control module for controlling billing to the user according to service provision and causing information including the billing amount to be stored; and an allocated amount setting module for setting allocated amounts for a provider of the guidance-destination application and a provider of the guidance-source application based on the billing amount charged to the user according to service provision.

## Description

### CROSS-REFERENCE TO RELATED APPLICATIONS

This application claims the right of priority based on Japanese Patent Application No. 2013-202924 (filed on September 30, 2013), which is hereby incorporated by reference herein in its entirety.

### FIELD OF THE INVENTION

The present invention relates to a server, a system and a method for providing a service using an application to a user.

### BACKGROUND

Conventionally, contingent fee type advertisement in which an advertiser posts an advertisement on a website through an affiliate service provider and a fee, such as an advertisement rate, is paid on the basis of the click-through count of the posted advertisement or the like, has been practiced mainly on the Internet. A study is being made to apply the mechanism of such contingent fee type advertisement also to the advertisement of applications, such as online gaming software. For example, there has been proposed a mechanism for guiding a user to the download site of a corresponding application when a posted advertisement is clicked on (see, for example, Japanese Patent Laid-Open No. 2010-9207).

### SUMMARY

### [Technical Problem]

In the above-described mechanism of advertisement, however, simply determining the fee according to the click-through count or the like does not always ensure that the determined fee is fully reasonable. In one case, for example, even if a user is guided to the download site of an application, such as online gaming software, the user may only download the application and may not play the application. In another case, the user may enjoy online gaming only to the extent of free play. In yet another case, the user may enjoy online gaming on the basis of paid play. Accordingly, the benefit that a provider of the guidance-destination application may gain differs depending on the case. If the fee is determined according to the click-through count or the like, however, no consideration is given to the benefit that the provider of the guidance-destination application may gain actually. The fee that is determined therefore cannot be said to be always reasonable for anyone who has guided the user.

One object of the embodiments of the present invention is to more appropriately set the allocated amount of benefit or the like for a service using an application. Other objects of the present invention will be apparent when a reference is made to the entirety of the present application.

### [Solution to Problem]

A server according to one embodiment of the present invention may provide one or more than one service using an application to a user and may include a storage device configured to store information; and one or more than one processor configured to execute a predetermined program, wherein the predetermined program may include a guidance source identifying module configured to identify a guidance-source application whereby the user is guided to a guidance-destination application used in the service; a billing control module configured to control billing to the user according to the provision of the service and cause information including a billing amount to be stored in the storage device; and an allocated amount setting module configured to set, on the basis of the billing amount charged to the user according to the provision of the service, amounts to be allocated to a provider of the guidance-destination application used in the service and a provider of the guidance-source application whereby the user is guided to the guidance-destination application. Here, the meaning of "guided to the guidance-destination application" includes guiding the user to various access destinations (destinations where guidance-destination applications are obtained (downloaded), access destinations to which access is gained to receive the provision of services using the guidance-destination applications, and the like) related to the guidance-destination application, or guiding a terminal device that the user operates.

A system according to one embodiment of the present invention may include a plurality of terminal devices; and a server communicably connected to the terminal devices to provide one or more than one service using an application to users operating the terminal devices, wherein each of the terminal devices may include a terminal-oriented storage device configured to store information; and one or more than one terminal-oriented processor configured to execute a predetermined terminal-oriented program including a guidance-source application, the guidance-source application may include a guidance destination identifying information request module configured to request, from the server, guidance destination identifying information capable of identifying a guidance-destination application; a screen display module configured to display a screen including a guidance area for the terminal device to gain access to an access destination related to the guidance-destination application identified by the guidance destination identifying information received from the server; and an access module configured to cause the terminal device to gain access to the access destination related to the guidance-destination application in response to the selection of the guidance area by the user, the server may include a server storage device configured to store one or more than one piece of guidance destination identifying information; and one or more than one server processor configured to execute a predetermined server program, and the predetermined server program may include a guidance destination identifying information transmission module configured to transmit the guidance destination identifying information to the terminal device in response to a request from the terminal device; a guidance source identifying module configured to identify the guidance-source application whereby the user is guided to the guidance-destination application used in the service; a billing control module configured to control billing to the user according to the provision of the service and cause information including a billing amount to be stored in the storage device; and an allocated amount setting module configured to set, on the basis of the billing amount charged to the user according to the provision of the service, amounts to be allocated to a provider of the guidance-destination application used in the service and a provider of the guidance-source application whereby the user is guided to the guidance-destination application.

A method according to one embodiment of the present invention may provide one or more than one service using an application to a user, the method including the steps of identifying a guidance-source application whereby the user is guided to a guidance-destination application used in the service; controlling billing to the user according to the provision of the service; storing information including a billing amount (preferably by the step of controlling); and setting, on the basis of the billing amount charged to the user according to the provision of the service, amounts to be allocated to a provider of the guidance-destination application used in the service and a provider of the guidance-source application whereby the user is guided to the guidance-destination application.

### [Advantageous Effect of the Invention]

According to various embodiments of the present invention, it is possible to more appropriately set the allocated amount of benefit or the like for a service using an application.

### BRIEF DESCRIPTION OF THE DRAWINGS

Figure 1 is a block diagram schematically illustrating the hardware configuration of a system 1 including a server 10 according to one embodiment of the present invention.
Figure 2 is a block diagram schematically illustrating the module configuration of a program 50 in one embodiment.
Figure 3 is a drawing illustrating one example of an application management table in one embodiment.
Figure 4 is a drawing illustrating one example of a guidance history management table in one embodiment.
Figure 5 is a drawing illustrating one example of a new-login management table in one embodiment.
Figure 6 is a drawing illustrating one example of a billing information management table in one embodiment.
Figure 7 is a sequence diagram illustrating the way of communication between a terminal device 30 and a server 10 in one embodiment.
Figure 8 is a drawing illustrating one example of a display screen 60 in one embodiment.
Figure 9 is a flowchart illustrating an example of login processing in one embodiment.
Figure 10 is a drawing illustrating one example of the relationship between a guidance history management table and a new-login management table in one embodiment.
Figure 11 is a drawing illustrating one example of the relationship between a guidance history management table and a new-login management table in one embodiment.
Figure 12 is a drawing illustrating one example of the relationship between a guidance history management table and a new-login management table in one embodiment.
Figure 13 is a drawing illustrating one example of the relationship between a guidance history management table and a new-login management table in one embodiment.
Figure 14 is a drawing illustrating one example of the relationship between a guidance history management table and a new-login management table in one embodiment.

### DESCRIPTION OF THE PREFERRED EMBODIMENTS

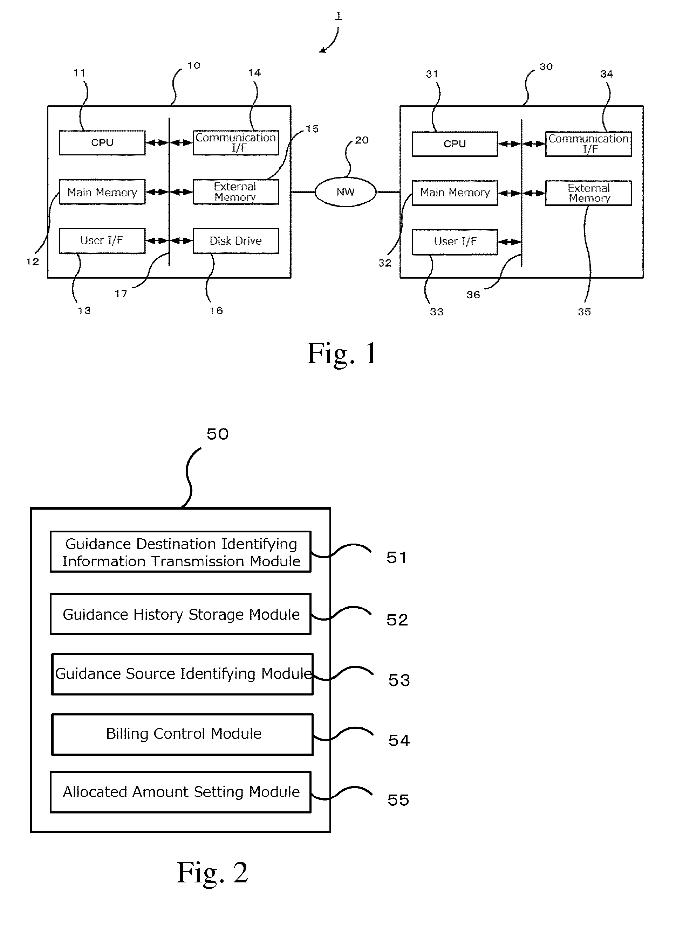

Fig. 1 is a block diagram schematically illustrating a hardware configuration of a system 1 according to an embodiment of the present invention including a server 10 according to an embodiment of the present invention. As shown in Fig. 1, the server device 10 according to an embodiment may be communicatively connected via a communication network 20 such as the Internet to a terminal device 30 configured as a conventional computer, and may provide various services using an application to a user operating the terminal device 30. Additionally, the server 10 may be communicatively connected to terminal devices other than the terminal device 30 and not shown. The services provided by the server 10 may include digital content services for providing digital contents such as online games or tunes and platform services for implementing various communications between a plurality of users operating a plurality of terminal devices 30.

As shown, the server 10 may include a central processing unit (CPU) (processor) 11, a main memory 12, a user interface (I/F) 13, a communication I/F 14, an external memory 15, and a disk drive 16, and these components may be electrically connected to one another via a bus 17. The CPU 11 may bad an operating system and various programs such as control programs for controlling the provision of various services into the main memory 12 from the external memory 15, and may execute commands included in the loaded programs. The main memory 12 may be used to store a program to be executed by the CPU 11, and may be formed of, for example, a dynamic random access memory (DRAM).

The user I/F 13 may include, for example, an information input device such as a keyboard or a mouse for accepting an input from an operator, and an information output device such as a liquid crystal display for outputting calculation results of the CPU 11. The communication I/F 14 may be implemented as hardware, firmware, or communication software such as a transmission control protocol/Internet protocol (TCP/IP) driver or a point-to-point protocol (PPP) driver, or a combination thereof, and may be configured to be able to communicate with the terminal devices 30 via the communication network 20.

The external memory 15 may be formed of, for example, a magnetic disk drive and store various programs such as a control program for controlling the provision of various services. The external memory 15 may also store various data used in providing the various services. The various data that may be stored in the external memory 15 may also be stored on a database server communicatively connected to the server 10 and physically separate from the server 10. The disk drive 16 may read data stored in a storage medium such as a compact disc read only memory (CD-ROM), digital versatile disc read only memory (DVD-ROM), or DVD Recordable (DVD-R) disc, or write data to such a storage medium.

In an embodiment, the server 10 may be a web server for managing a web site including a plurality of hierarchical web pages. The terminal devices 30 may fetch HTML data for rendering a web page from the server 10 and analyze the HTML data to present the web page to a user of the terminal devices 30. The HTML data for rendering the web page may also be stored on the external memory 15. The HTML data may comprise HTML documents written in markup languages such as HTML; the HTML documents may be associated with various images. Additionally, the HTML documents may include programs written in script languages such as ActionScript™ and JavaScript™.

The external memory 15 may store various applications to be executed on execution environments of the terminal device 30 other than browser software. These various applications may include various programs and various data such as image data to be referred to for executing the programs. The programs may be created in, for example, object oriented languages such as Objective-C™ and Java™. The created programs may be stored on the external memory 15 in the form of application software along with various data. The application software stored on the external memory 15 may be delivered to a terminal device 30 in response to a delivery request. The application software delivered from the server 10 may be received by the terminal device 30 through a communication I/F 34 in accordance with the control of CPU 31 and sent to an external memory 35 for storage thereon. The application software may be launched in accordance with the user's operation on the terminal device 30 and maybe executed on a platform implemented on the terminal device 30 such as NgCore™ or Android™. The server 10 may provide the applications executed on the terminal devices 30 with various data required for providing various services. Additionally, the server 10 can store various data sent from the terminal device 30 for each user, thereby managing the provision of the various services.

Thus, the server 10 may manage the web site for providing various services and deliver web pages constituting the web site in response to a request from the terminal device 30, thereby providing various services. Also, the server 10 can provide various services based on communication with an application performed on the terminal device 30 in place of, or in addition to, such browser-based services. Whichever mode may be taken to provide the services, the server 10 can store data required to provide the various services for each identification identifying a user. Briefly, the server 10 may also include a function to authenticate a user at start of provision of services. The types of the various services implemented by the web site or applications of the server 10 are not limited to those explicitly described herein.

In an embodiment, the terminal device 30 may be any information processing device that may display on a web browser a web page of a web site obtained from the server 10 and include an application executing environment for executing applications; and the terminal devices 30 may include smartphones, tablet terminals, and game-dedicated terminals.

As shown, the terminal device 30 may include a central processing unit (CPU) (processor) 31, a main memory 32, a user interface (I/F) 33, a communication I/F 34, and an external memory 35, and these components may be electrically connected to one another via a bus 36.

The CPU 31 may bad various programs such as an operating system into the main memory 32 from the external memory 35, and may execute commands included in the loaded programs. The main memory 32 may be used to store a program to be executed by the CPU 31, and may be formed of, for example, a dynamic random access memory (DRAM).

The user I/F 33 may include an information input device for receiving user inputs and an information output device for outputting an operation result of CPU 31; and the user I/F may include a display device such as a liquid crystal display having a touch panel.

The communication I/F 34 may be implemented as hardware, firmware, or communication software such as a transmission control protocol/Internet protocol (TCP/IP) driver or a point-to-point protocol (PPP) driver, or a combination thereof, and may be configured to be able to communicate with the server 10 via the communication network 20.

The external memory 35 may comprise, for example, a magnetic disk drive or a flash memory and store various programs such as an operating system. When receiving an application from a server 10 via the communication I/F 34, the external memory 35 may store the received application.

A terminal device 30 having such an architecture may include, for example, browser software for interpreting an HTML file (HTML data) and rendering a screen; this browser software may enable the terminal device 30 to interpret the HTML data fetched from the server 10 and render web pages corresponding to the received HTML data. Further, the terminal device 30 may include plug-in software (e.g., Flash Player distributed by Adobe Systems Incorporated) embedded into browser software; therefore, the terminal device 30 can fetch from the server 10 a SWF file embedded in HTML data and execute the SWF file by using the browser software and the plug-in software. Also, the terminal device 30 can execute an application fetched from the server 10.

Next, a description will be made of a program 50 executed by the CPU 11 of the server 10 in one embodiment. Figure 2 is a block diagram illustrating the module configuration of the program 50 in one embodiment. The program 50 is stored in the external memory 15 or the like and, as illustrated, may include a guidance destination identifying information transmission module 51 configured to transmit one or more than one piece of guidance destination identifying information capable of identifying a guidance-destination application to which the user is guided, in response to a request from the terminal device 30; a guidance history storage module 52 configured to cause guidance history information concerning a combination of the user's terminal device 30, the guidance-destination application, and the guidance-source application whereby this user is guided to this guidance-destination application when the user is guided to the guidance-destination application to be stored in an external memory 15 or the like; a guidance source identifying module 53 configured to identify the guidance-source application whereby the user is guided to the guidance-destination application used in the service; a billing control module 54 configured to control billing to the user according to the provision of the service and cause information including a billing amount to be stored in the external memory 15 or the like; and an allocated amount setting module 55 configured to set amounts to be allocated to a provider of the guidance-destination application used in the service and a provider of the guidance-source application whereby the user is guided to the guidance-destination application, on the basis of the billing amount charged to the user according to the provision of the service.

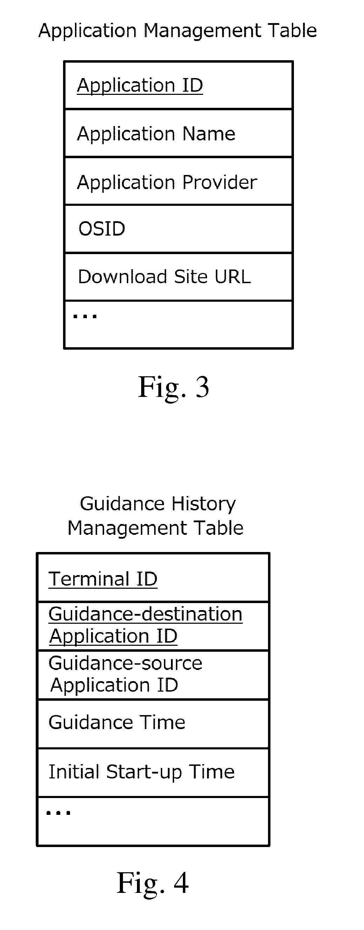

Figures 3 to 6 respectively show one example of information managed using each table made up in the external memory 15 or the like of the server 10. Figure 3 is one example of information managed using an application management table. As illustrated, the application management table in one embodiment is used to manage information, including an "application name" which is the name of this application, an "application provider" showing a provider of this application, an "OSID" for identifying an OS under which this application operates, and a "download site URL" showing the URL of a download site for obtaining (downloading) this application, in association with an "application ID" for identifying the application. Here, in one embodiment, a different "application ID" is set in an application the same in content but different in the OS under which the application operates, and a "download site URL" according to the OS under which the application operates is set in the application. Note that the same "application ID" may be set in an application different in the OS under which the application operates but the same in content. In this case, the application may be identified by a combination of the "application ID" and the "OSID."

Figure 4 is one example of information managed using a guidance history management table. As illustrated, the guidance history management table in one embodiment is used to manage information, including a "guidance-source application ID" for identifying a guidance-source application whereby the user of this terminal device 30 is guided to this guidance-destination application, a "guidance time" showing the time at which the user of this terminal device 30 is guided to this guidance-destination application, and an "initial start-up time" showing the time at which this guidance-destination application is started up for the first time on this terminal device 30, in association with a combination of a "terminal ID" for identifying the terminal device 30 and a "guidance-destination application ID" for identifying a guidance-destination application.

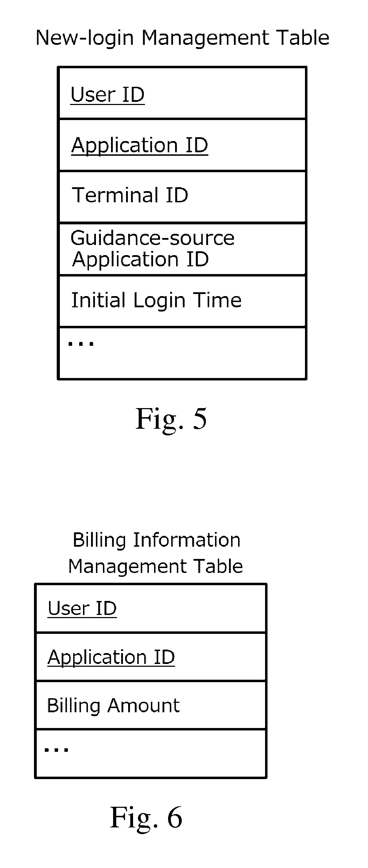

Figure 5 is one example of information managed using a new-login management table. As illustrated, the new-login management table in one embodiment is used to manage information, including a "terminal ID" for identifying a terminal device 30 through which this user logs in to this service using an application for the first time (this user is registered as a user of the service), a "guidance-source application ID" for identifying a guidance-source application whereby this user is guided to this application, and an "initial login time" showing the time at which this user logs in to this service using the application for the first time, in association with a "user ID" for identifying the user and an "application ID" for identifying the application.

Figure 6 is one example of information managed using a billing information management table. As illustrated, the billing information management table in one embodiment is used to managed information, including a "billing amount" showing a billing amount charged to this user according to the provision of this service using an application, in association with a combination of a "user ID" for identifying the user and an "application ID" for identifying the application.

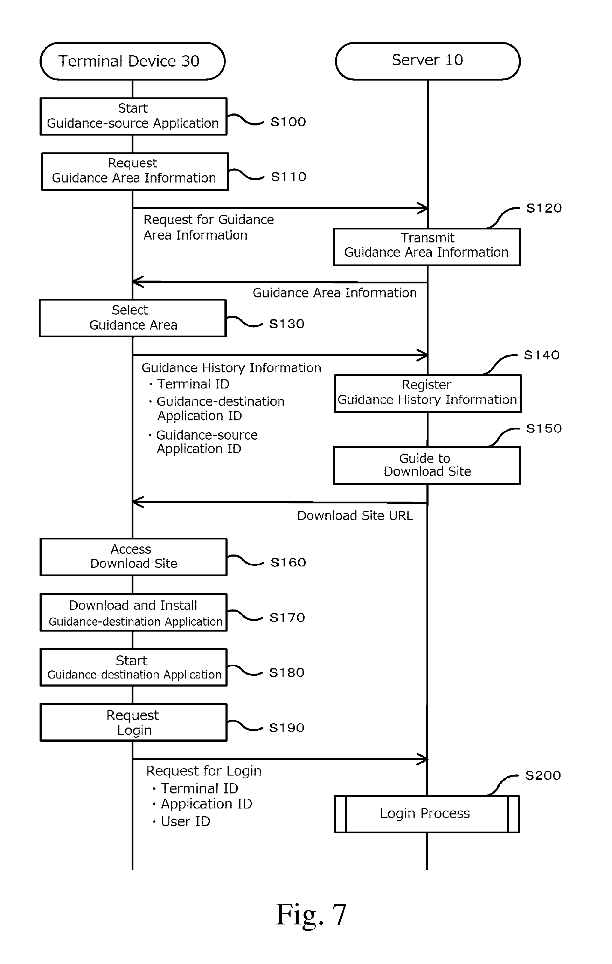

Next, a description will be made of the operation of the server 10 configured as described above in one embodiment. Figure 7 is a sequence diagram illustrating the way of communication between the server 10 and the terminal device 30 when the user of the terminal device 30 is guided from a guidance-source application to a guidance-destination application. First, a request for guidance area information is made from the terminal device 30 to the server 10 when the guidance-source application is started up on the terminal device 30 (step S100) (step S110).

Upon receipt of the request for the guidance area information, the server 10 identifies and transmits the guidance area information to the terminal device 30 (step S120). Specifically, the server 10 identifies a guidance-destination application, among applications managed using the application management table, to which the user is guided, according to a predetermined rule, and transmits guidance area information corresponding to this identified guidance-destination application to the terminal device 30. In one embodiment, the guidance area information transmitted to the terminal device 30 includes an "application ID" (guidance destination identifying information) managed using the application management table and the icon image of the application. Here, the guidance-destination application can be identified by applying various rules. For example, it is possible to previously set a guidance-destination application for each guidance-source application and apply a rule of identifying the guidance-destination application according to this setting, a rule of identifying the guidance-destination application according to the attributes (age, gender, and the like) of the user, a rule of identifying the guidance-destination application according to the current date and the current time, a rule of identifying the guidance-destination application according to the sales of applications and the number of downloads in a predetermined period, and a rule made by combining these rules.

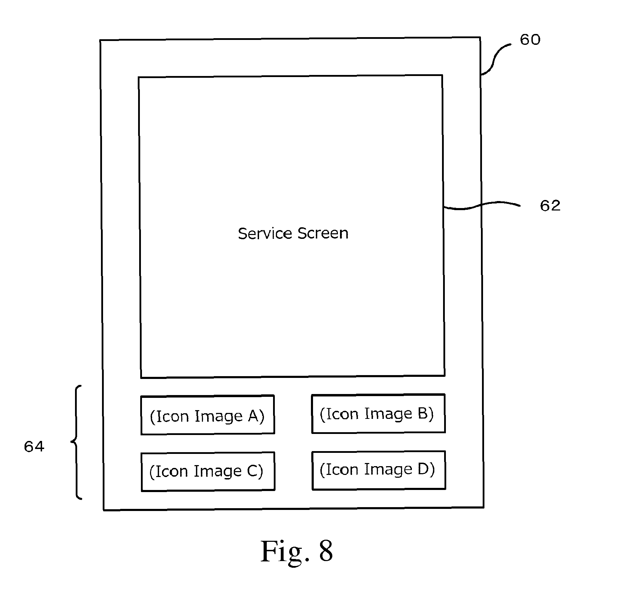

When the guidance area information is transmitted from the server 10, a screen including a guidance area corresponding to the transmitted guidance area information is displayed on the terminal device 30. Figure 8 is one example of a display screen 60 of the guidance-source application displayed on the terminal device 30. As illustrated, the display screen 60 includes a main section 62 on which a screen for a service using the guidance-source application (for example, online gaming) is displayed and a guidance area section 64 located below this main section 62, and four guidance areas are arranged in the guidance area section 64. An icon image included in the guidance area information received from the server 10 is displayed in each guidance area. In addition, the "application ID" of the guidance-destination application also included in the guidance area information is set in each guidance area. In this example, the four guidance areas are arranged in the guidance area section 64, and therefore, four applications are identified as guidance-destination applications in step S120 described above. Accordingly, four pieces of guidance area information corresponding to these applications are transmitted from the server 10 to the terminal device 30. Note that the number of guidance areas on the display screen 60 is optional In addition, the display mode of the guidance areas is not limited to a mode of display as icon images. The display mode may be other mode, such as displaying the guidance areas in a list form or using pop-up pictures. Yet additionally, IDs for identifying respective guidance areas may be set in the plurality of guidance areas on the display screen 60. Consequently, it is possible to analyze, for example, the frequency at which each guidance area is selected

When the user selects one of the guidance areas arranged in the guidance area section 64 of the display screen 60 (step S130), the guidance history information is transmitted from the terminal device 30 to the server 10, and the received guidance history information is registered in the server 10 (step S140). The guidance history information is specifically composed of a "terminal ID" for identifying the terminal device 30, a "guidance-source application ID" for identifying the guidance-source application, and a "guidance-destination application ID" for identifying the guidance-destination application. The guidance history information is registered by setting these pieces of information in the guidance history management table. Note that the current time when the guidance history information is registered is set for the "guidance time," among the pieces of information managed using the guidance history management table.

As the result of registering the guidance history information in this way, the user is guided to a guidance-destination application download site in the server 10 (step S150). Specifically, a corresponding "download site URL" in the application management table is acquired using the "application ID" received from the terminal device 30, and this acquired "download site URL" is transmitted to the terminal device 30 of the user. Alternatively, the user may be redirected to the download site by the server 10. Yet additionally, "download site URLs" may be included in the guidance area information to be transmitted to the terminal device 30 so as to be set in the guidance areas of the display screen 60, so that the terminal device 30 directly gains access to a download site when the user selects each guidance area.

Subsequently, access is gained to the download site of a guidance-destination application (step S160) in the terminal device 30 to download and install the guidance-destination application from this download site (step S170). Thereafter, the installed guidance-destination application is started up (step S180). Here, when the guidance-destination application is started up for the first time, the start-up time may be set in the "initial start-up time" of the guidance history management table. Then, the guidance history information may be deleted if the time elapsed (can be derived on the basis of the abovementioned "guidance time" and "initial start-up time") from when the guidance area is selected to when the guidance-destination application is started up exceeds a predetermined period of time. That is, the guidance can be regarded as being not valid if the time elapsed from when the guidance area is selected to when the guidance-destination application is started up exceeds the predetermined period of time.

Subsequently, in the terminal device 30, a request for login to a service using this guidance-destination application is transmitted to the server 10 in response to the start-up of the guidance-destination application (step S190). The "terminal ID" of the terminal device 30, the "application ID" of the guidance-destination application, and the "user ID" of the user are transmitted when the login request is transmitted Here, in one embodiment, a common "user ID" can be set for various services that the server 10 provides, and the user of the terminal device 30 can receive the provision of various services using this common "user ID." For example, if the user has already logged in to the server 10 in the terminal device 30 according to the execution of the above-described guidance-source application, the "user ID" used in this login can be used in succession to make the login request in step S190.

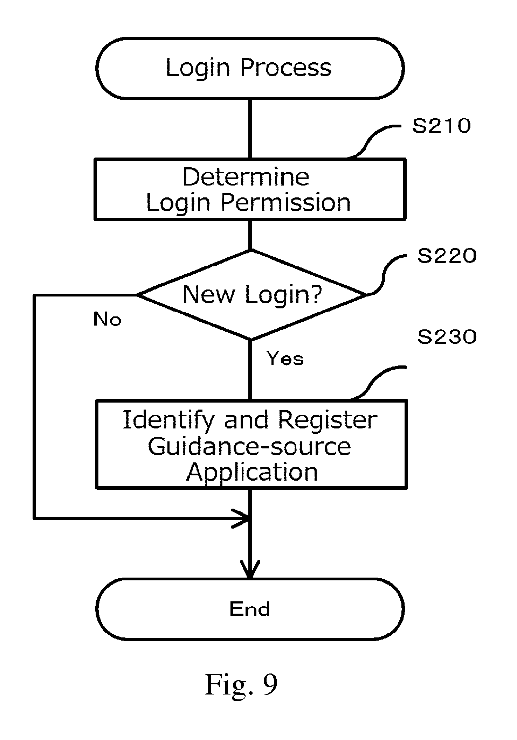

Upon receipt of the login request from the terminal device 30, the server 10 executes the login process shown by way of example in Figure 9 (step S200). This login process is executed by the server 10 when a login request for a service provided by the server 10 is received from the terminal device 30. That is, this login process is executed when the login request is received from the terminal device 30, irrespective of whether or not the inter-application guidance shown by way of example in Figure 7 is performed In the login process, a determination is first made whether or not a login is permitted, as shown in Figure 9 (step S210). A determination on the permission or denial of login can be made by means of password authentication or the like. Such a process of determining the permission or denial of login is a common process, and therefore, will be described in no further detail here.

Next, a determination is made whether or not the login to this service using an application by this user is a new login (step S220). Specifically, a determination is made, at the time of request for a login, whether or not a record corresponding to a combination of the "user ID" and the "application ID" transmitted from the terminal device 30 exists in the new-login management table. If the record does not exist, the login is determined to be a new login. If the record exists, the login is determined to be not a new login.

If the login is determined to be not a new login, the login process is completed directly. If the login is determined to be a new login, the guidance-source application is identified and registered (step S230), and this login process is completed The guidance-source application is specifically identified by acquiring a "guidance-source application ID" corresponding to a combination of the "terminal ID" and the "application ID" transmitted from the terminal device 30 at the time of login request from the guidance history management table and creating a new record in the new-login management table using this acquired "guidance-source application ID." Note that the current time is set in the "initial login time" of the new-login management table. Here, the "guidance-source application ID" may not be registered if the time elapsed (can be derived on the basis of the abovementioned "guidance time" and "initial login time") from when the guidance area is selected to when the new login is performed or the time elapsed (can be derived on the basis of the abovementioned "initial start-up time" and "initial login time") from when the guidance-destination application is started up for the first time to when the new login is performed exceeds a predetermined period of time. That is, the guidance can be regarded as being invalid if the time elapsed from when the guidance area is selected or when the guidance-destination application is started up for the first time to when the new login is performed exceeds the predetermined period of time. Note that if a record corresponding to the combination of the "terminal ID" and the "application ID" does not exist in the guidance history management table in a case where the login is determined to be a new login, the login is not a new login according to inter-application guidance. Consequently, a value indicating that the guidance-source application is "not present" (for example, a null value) is set in the "guidance-source application ID" of the new-login management table.

A description has heretofore been made of operation when the user is guided from a guidance-source application to a guidance-destination application. Next, a description will be made of operation to set an allocated amount of benefit or the like for an application provider. As described above, guidance-source applications corresponding to combinations of users and applications are managed in the newbgin management table in the server 10 of one embodiment. In addition, billing amounts corresponding to combinations of users and applications (billing amounts according to the provision of services using applications) are managed in the billing information management table. When allocated amounts of benefit or the like are set for application providers, the allocated amounts are set for a provider of this application and a provider of a guidance-source application whereby this user is guided to this application, on the basis of billing amounts corresponding to these combinations of users and applications. The allocated amounts can be set specifically by applying various calculating formulas. For example, allocated amounts for the provider of this application, the provider of the guidance-source application, the provider of the server 10, the provider of the download site of this application, and the like can be set at a predetermined ratio on the basis of billing amounts according to the provision of services using the application. As described above, a billing amount according to the use of a service using an application is taken into consideration also when an allocated amount is set for the provider of the guidance-source application. Consequently, a more reasonable allocated amount is set also for the provider of the guidance-source application.

As described above, the guidance-source application in one embodiment has the function of requesting guidance area information from the server 10, causing the terminal device 30 to display a screen including guidance areas for the terminal device 30 to gain access to the download site or the like of a guidance-destination application corresponding to the guidance area information received from the server 10, causing the terminal device 30 to gain access to an access destination related to the guidance-destination application in response to the selection of a guidance area by the user, and transmitting guidance history information ("terminal ID", "guidance-source application ID" and "guidance-destination application ID") to the server 10. For example, a provider of each application is allowed to easily take part in a program (revenue share program) related to the above-described setting of allocated amounts by laying open add-on software (SDK or the like) including a module configured to request such guidance area information, a module configured to display a screen including a guidance area corresponding to the received guidance area information, a module configured to cause the terminal device 30 to gain access to the access destination related to the guidance-destination application, a module configured to transmit guidance history information, and the like to the providers of applications.

In one embodiment, a guidance-source web page can be applied in place of or in addition to the above-described guidance-source application. That is, it is possible to introduce a mechanism of displaying the abovementioned guidance area on the web page and guiding the user to the guidance-destination application in response to the selection of this guidance area. In this case, information for identifying the web page, information for identifying a service composed of a plurality of web pages including the abovementioned web page, or the like can be used as information for identifying a guidance-source web page corresponding to the "guidance-source application ID." By managing the providers of guidance-source web pages identified by such information, it is possible to set amounts allocated to the providers of guidance-source web pages on the basis of a billing amount according to the use of a service using a guidance-destination application. For example, it is assumed that a platform service that the server 10 provides is composed of a plurality of web pages and guidance areas are included in these web pages. Note that if guidance-source web pages are applied, guidance history information transmitted in response to the selection of a guidance area by a user can be temporarily cached in an external memory 35 of the terminal device 30 or the like as cookies. In this case, it is possible to cause guidance history information included in the external memory 35 of the terminal device 30 or the like as cookies to be transmitted to the server 10 when, for example, a guidance-destination application is downloaded, installed or started up, so that in the server 10, a new record is created in the guidance history management table using the received guidance history information.

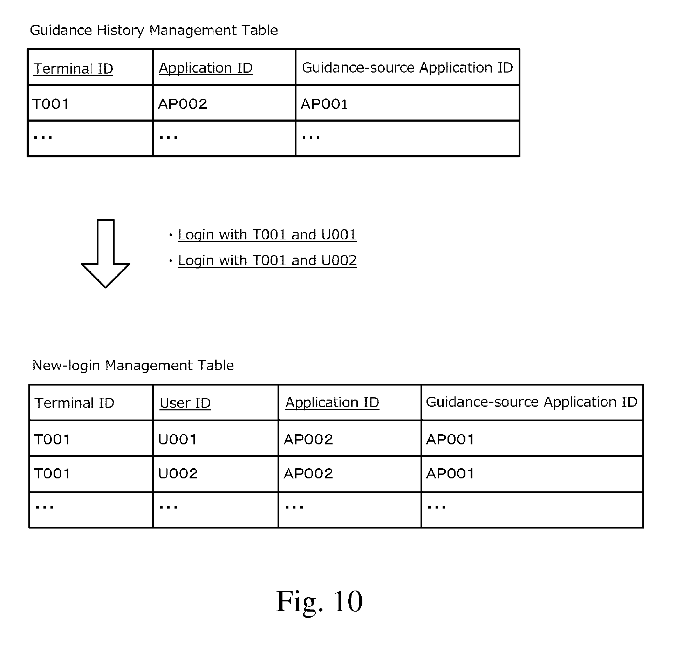

Here, a case will be assumed in which a user owns a plurality of terminal devices 30 and a plurality of "user IDs." Figure 10 shows the setup contents of a guidance history management table and a new-login management table in a case in which the user uses a single terminal device 30 (T001) and a plurality of user IDs (U001 and U002) to use various services that a server 10 provides and in which inter-application guidance (download, install and initial startup) and login to a service using an application are performed in the order shown below.
(1) On the terminal device 30 (T001), the user is guided from a guidance-source application (AP001) to an application (AP002).
(2) On the terminal device 30 (T001), the user logs in to the application (AP002) with the user ID (U001).
(3) On the terminal device 30 (T001), the user logs in to the application (AP002) with the user ID (U002).

In this case, the guidance-source application (AP001) is set in the new-login management table for a combination of the user ID (U001) and the application (AP002) in one embodiment, as illustrated in Figure 10. Likewise, the guidance-source application (AP001) is set for a combination of the user ID (U002) and the application (AP002). Accordingly, both a billing amount according to service provision based on the user ID (U001) and a billing amount according to service provision based on the user ID (U002) are taken into consideration at the time of setting the allocated amount of a provider of the guidance-source application (AP001).

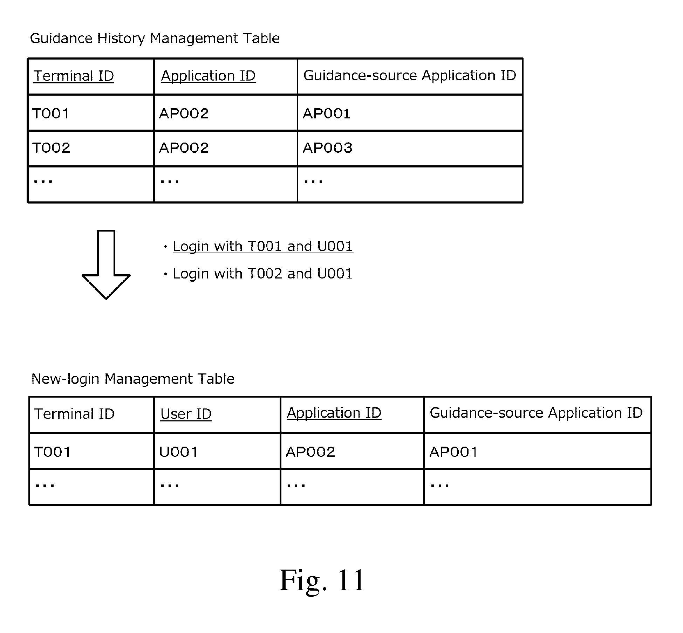

Figure 11 shows the setup contents of the guidance history management table and the new-login management table in a case in which the user uses a plurality of terminal devices 30 (T001 and T002) and a single user ID (U001) to use various services that the server 10 provides and in which inter-application guidance and login to a service are performed in the order shown below.
(1) On the terminal device 30 (T001), the user is guided from the guidance-source application (AP001) to the application (AP002).
(2) On the terminal device 30 (T002), the user is guided from a guidance-source application (AP003) to the application (AP002).
(3) On the terminal device 30 (T001), the user logs in to the application (AP002) with the user ID (U001).
(4) On the terminal device 30 (T002), the user logs in to the application (AP002) with the user ID (U001).

In this case, the guidance-source application (AP001) is set in the new-login management table for a combination of the user ID (U001) and the application (AP002) in one embodiment, as illustrated in Figure 11. On the other hand, the guidance-source application (AP003) whereby the user is guided to the application (AP002) on the terminal device 30 (T002) is not set in the new-login management table (since the login with the user ID (U001) on the terminal device 30 (T002) is not a new login). Accordingly, a billing amount according to service provision based on the user ID (U001) is taken into consideration at the time of setting the allocated amount of the provider of the guidance-source application (AP001), but is not taken into consideration at the time of setting the allocated amount of a provider of the guidance-source application (AP003).

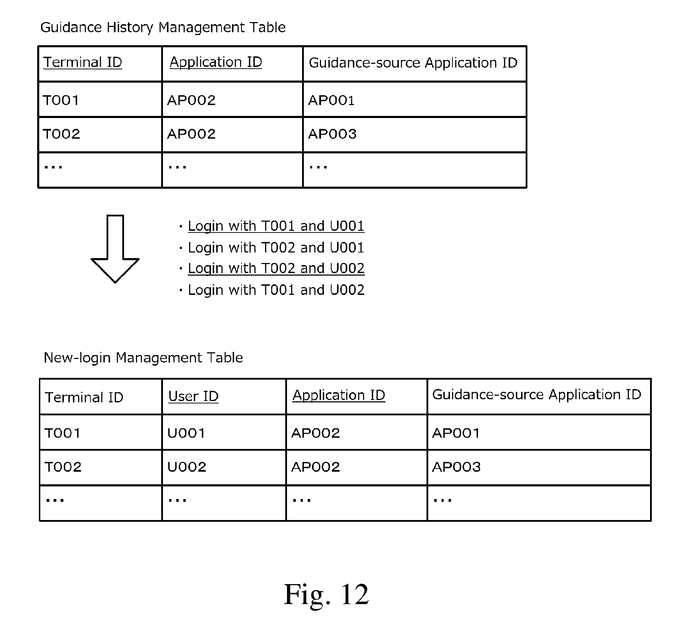

Figure 12 shows the setup contents of the guidance history management table and the new-login management table in a case in which the user uses a plurality of terminal devices 30 (T001 and T002) and a plurality of user IDs (U001 and U002) to use various services that the server 10 provides and in which inter-application guidance and login to a service are performed in the order shown below.
(1) On the terminal device 30 (T001), the user is guided from the guidance-source application (AP001) to the application (AP002).
(2) On the terminal device 30 (T002), the user is guided from the guidance-source application (AP003) to the application (AP002).
(3) On the terminal device 30 (T001), the user logs in to the application (AP002) with the user ID (U001).
(4) On the terminal device 30 (T002), the user logs in to the application (AP002) with the user ID (U001).
(5) On the terminal device 30 (T002), the user logs in to the application (AP002) with the user ID (U002).
(6) On the terminal device 30 (T001), the user logs in to the application (AP002) with the user ID (U002).

In this case, the guidance-source application (AP001) is set in the new-login management table for a combination of the user ID (U001) and the application (AP002) in one embodiment, as illustrated in Figure 12. In addition, the guidance-source application (AP003) is set for a combination of the user ID (U002) and the application (AP002). Accordingly, a billing amount according to service provision based on the user ID (U001) is taken into consideration at the time of setting the allocated amount of a provider of the guidance-source application (AP001). In addition, a billing amount according to service provision based on the user ID (U002) is taken into consideration at the time of setting the allocated amount of a provider of the guidance-source application (AP003).

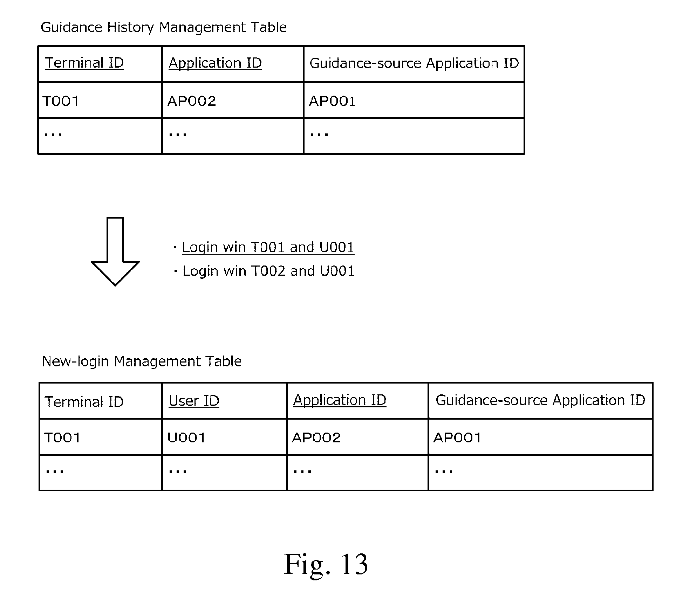

Figure 13 shows the setup contents of the guidance history management table and the new-login management table in a case in which the user uses a plurality of terminal devices 30 (T001 and T002) and a single user ID (U001) to use various services that the server 10 provides and in which inter-application guidance and login to a service are performed in the order shown below.
(1) On the terminal device 30 (T001), the user is guided from the guidance-source application (AP001) to the application (AP002).
(2) On the terminal device 30 (T002), the user introduces (downloads, installs and initially starts up) the application (AP002) (without guidance from the guidance-source application).
(3) On the terminal device 30 (T001), the user logs in to the application (AP002) with the user ID (U001).
(4) On the terminal device 30 (T002), the user logs in to the application (AP002) with the user ID (U001).

In this case, the guidance-source application (AP001) is set in the new-login management table for a combination of the user ID (U001) and the application (AP002) in one embodiment, as illustrated in Figure 13. Accordingly, both a billing amount according to service provision on the terminal device 30 (T001) based on the user ID (U001) and a billing amount according to service provision on the terminal device 30 (T002) based on the user ID (U001) are taken into consideration at the time of setting the allocated amount of a provider of the guidance-source application (AP001).

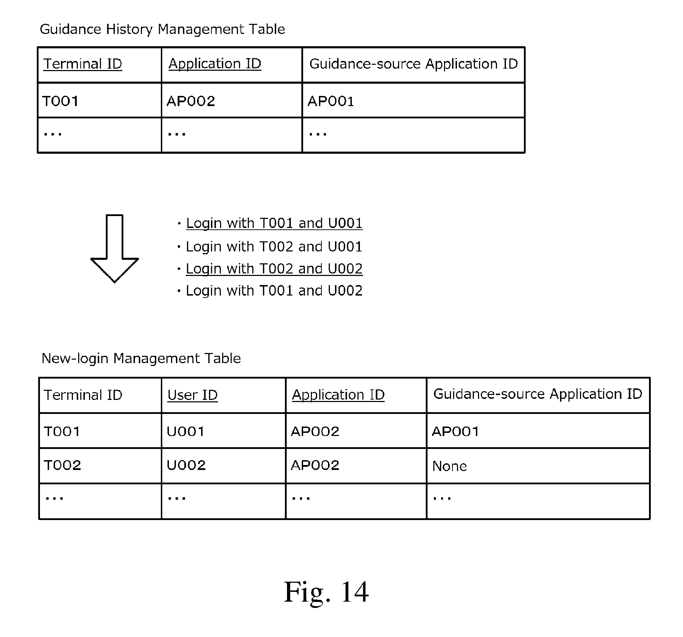

Figure 14 shows the setup contents of the guidance history management table and the new-login management table in a case in which the user uses a plurality of terminal devices 30 (T001 and T002) and a plurality of user IDs (U001 and U002) to use various services that the server 10 provides and in which inter-application guidance and login to a service are performed in the order shown below.
(1) On the terminal device 30 (T001), the user is guided from the guidance-source application (AP001) to the application (AP002).
(2) On the terminal device 30 (T002), the user introduces the application (AP002) (without guidance from the guidance-source application).
(3) On the terminal device 30 (T001), the user logs in to the application (AP002) with the user ID (U001).
(4) On the terminal device 30 (T002), the user logs in to the application (AP002) with the user ID (U001).
(5) On the terminal device 30 (T002), the user logs in to the application (AP002) with the user ID (U002).
(6) On the terminal device 30 (T001), the user logs in to the application (AP002) with the user ID (U002).

In this case, the guidance-source application (AP001) is set in the new-login management table for a combination of the user ID (U001) and the application (AP002) in one embodiment, as illustrated in Figure 14. On the other hand, the Guidance-source Application ID field is set as "none" for a combination of the user ID (U002) and the application (AP002). Accordingly, a billing amount according to service provision based on the user ID (U001) is taken into consideration at the time of setting the allocated amount of a provider of the guidance-source application (AP001). On the other hand, the allocated amount of a provider of the guidance-source application is not set for a billing amount according to service provision based on the user ID (U002).

As has been described using Figures 10 to 14, in the server 10 of one embodiment, one guidance-source application can be set for a combination of a "user ID" and an "application ID" and a billing amount according to service provision can be taken into consideration at the time of setting the allocated amount of a provider of this guidance-source application by applying a rule of identifying a guidance-source application on the basis of inter-application guidance performed on the same terminal device 30 as the one used at the time of new login to the service even if the user uses a plurality of terminal devices 30 and a plurality of "user IDs" to receive inter-application guidance and log in to the service.

In the server 10 of one embodiment described above, the guidance-source application whereby the user is guided to a guidance-destination application used in a service is identified, and allocated amounts are set for a provider of the guidance-destination application used in the service and a provider of the guidance-source application whereby the user is guided to this guidance-destination application, on the basis of a billing amount charged to the user according to the provision of this service. Accordingly, the billing amount charged to the user according to the provision of the service using the guidance-destination application is taken into consideration at the time of setting an allocated amount for the provider of the guidance-source application. A more reasonable allocated amount can therefore be set for the provider of the guidance-source application. As a result, it is possible to more appropriately set the allocated amount of benefit or the like for a service using an application.

In addition, the server 10 of one embodiment transmits guidance area information including the "application ID" (guidance destination identifying information) of a guidance-destination application to the terminal device 30, in response to a request from the terminal device 30. The guidance-source application causes a screen including a guidance area for the terminal device 30 to gain access to the download site (related access destination) of a guidance-destination application corresponding to the transmitted guidance area information to be displayed on the terminal device 30. Consequently, the guidance-destination application to which the user is guided by the guidance-source application can be designated by the server 10. As a result, the guidance-destination application set in the guidance area of the guidance-source application can be managed by a provider of the server 10.

Yet additionally, in the server 10 of one embodiment, guidance history information concerning a combination of a user's terminal device 30, a guidance-destination application, and a guidance-source application is registered in a guidance history management table when the user selects a guidance area (when the user is guided to the guidance-destination application). Then, at the time of new login (when the user is registered as a user of a service), the guidance-source application is identified on the basis of comparison between a combination of the user's terminal device 30 and the guidance-destination application and the guidance history information. Consequently, the guidance-source application can be identified on the basis of guidance to the guidance-destination application on the same terminal device 30 as the one used at the time of new login.

In one embodiment, guidance history information is registered when a guidance area is selected, and the guidance-source application is identified on the basis of comparison between a combination of the user's terminal device 30 and the guidance-destination application and the guidance history information at the time of new login. The time at which the guidance history information is registered may be a time other than the time at which the guidance area is selected, however. For example, the time may be when the guidance-destination application is downloaded, when the guidance-destination application is installed, or when the guidance-destination application is started up for the first time. In addition, the time at which the guidance-source application is identified may be a time other than the time of new login. For example, the guidance-source application may be identified each time a login is performed In this case, the guidance-source application may be identified on the basis of guidance to the guidance-destination application on the same terminal device 30 as the one used at the time of login.

In one embodiment, the guidance-source application is identified on the basis of comparison between a combination of the user's terminal device 30 and the guidance-destination application and the guidance history information at the time of new login. The guidance history information and new login need not be managed separately in this way, however. That is, a "user ID" for a service using a guidance-destination application (for example, the "user ID" may be automatically set based on the "terminal ID" of the terminal device 30 and granted to the user) may be granted to the user of the terminal device 30 at the server 10 when the user is guided to the guidance-destination application (for example, when the guidance area is selected, when the guidance-destination application is downloaded, when the guidance-destination application is installed, or when the guidance-destination application is started up for the first time), so that the user can receive a service using a guidance-destination application with this "user ID". In this case, managing the "user ID" in the guidance history management table means managing a guidance-source application corresponding to a combination of a user and an application using the guidance history management table. The new-login management table is therefore not indispensable.

In one embodiment, a user is guided to the download site of a guidance-destination application in response to the selection of a guidance area of a guidance-source application by the user. The guidance destination of the user is not limited to the download site, however. For example, the user may be guided to an access destination for receiving the provision of the service using the guidance-destination application. If, for example, the guidance-destination application has already been installed in the terminal device 30, the user may be guided to the access destination for receiving the service. Alternatively, if the guidance-destination application is not installed, the user may be guided to the download site.

The processes and procedures described and illustrated herein may also be implemented by software, hardware, or any combination thereof other than those explicitly stated for the embodiments. More specifically, the processes and procedures described and illustrated herein may be implemented by the installation of the logic corresponding to the processes into a medium such as an integrated circuit, a volatile memory, a non-volatile memory, a magnetic disk, or an optical storage. The processes and procedures described and illustrated herein may also be installed in the form of a computer program, and executed by various computers.

Even if the processes and the procedures described herein are executed by a single apparatus, software piece, component, or module, such processes and procedures may also be executed by a plurality of apparatuses, software pieces, components, and/or modules. Even if the data, tables, or databases described herein are stored in a single memory, such data, tables, or databases may also be dispersed and stored in a plurality of memories included in a single apparatus or in a plurality of memories dispersed and arranged in a plurality of apparatuses. The elements of the software and the hardware described herein can be integrated into fewer constituent elements or can be decomposed into more constituent elements.

With respect to the use of substantially any plural and/or singular terms herein, in addition to terms used without designation of being either plural or singular, those having skill in the art can translate from the plural to the singular and/or from the singular to the plural as is appropriate to the context.

## Claims

1. A server for providing one or more than one service using an application to a user, the server comprising:
a storage device configured to store information; and
one or more than one processor configured to execute a predetermined program,
the predetermined program including:
a guidance source identifying module configured to identify a guidance-source application guiding the user to a guidance-destination application used in the service;
a billing control module configured to control billing to the user according to the provision of the service and cause information including a billing amount to be stored in the storage device; and
an allocated amount setting module configured to set, on the basis of the billing amount charged to the user according to the provision of the service, amounts to be allocated to a provider of the guidance-destination application used in the service and a provider of the guidance-source application guiding the user to the guidance-destination application.

2. The server according to claim 1, wherein the guidance-source application causes a terminal device of the user to display a screen including a guidance area for the terminal device to gain access to an access destination related to the guidance-destination application in response to the selection of the guidance area by the user, and the guidance source identifying module identifies the guidance-source application causing the terminal device of the user to gain access to the access destination in response to the selection of the guidance area by the user.

3. The server according to claim 2, wherein the storage device stores one or more than one piece of guidance destination identifying information capable of identifying the guidance-destination application, the predetermined program further includes a guidance destination identifying information transmission module configured to transmit the guidance destination identifying information to the terminal device in response to a request from the terminal device, and the guidance-source application causes the terminal device to display a screen including the guidance area for the terminal device to gain access to an access destination related to the guidance-destination application identified by the transmitted guidance destination identifying information.

4. The server according to claim 1, wherein the predetermined program further includes a guidance history storage module configured to cause the storage device to store guidance history information concerning a combination of the terminal device of the user, the guidance-destination application, and the guidance-source application when the user is guided to the guidance-destination application used in the service, and the guidance source identifying module is configured to identify the guidance-source application on the basis of comparison between the guidance history information and a combination of the terminal device of the user and the guidance-destination application used in the service when the user is registered as a user of the service.

5. A system comprising a plurality of terminal devices; and a server communicably connected to the terminal devices to provide one or more than one service using an application to users operating the terminal devices,
each of the terminal devices including:
a terminal-oriented storage device configured to store information; and
one or more than one terminal-oriented processor configured to execute a predetermined terminal-oriented program including a guidance-source application, the guidance-source application including:
a guidance destination identifying information request module configured to request, from the server, guidance destination identifying information capable of identifying a guidance-destination application;
a screen display module configured to display a screen including a guidance area for the terminal device to gain access to an access destination related to the guidance-destination application identified by the guidance destination identifying information received from the server; and
an access module configured to cause the terminal device to gain access to the access destination related to the guidance-destination application in response to the selection of the guidance area by the user,
the server including:
a server storage device configured to store one or more than one piece of guidance destination identifying information; and
one or more than one server processor configured to execute a predetermined server program,
the predetermined server program including:
a guidance destination identifying information transmission module configured to transmit the guidance destination identifying information to the terminal device in response to a request from the terminal device;
a guidance source identifying module configured to identify the guidance-source application guiding the user to the guidance-destination application used in the service;
a billing control module configured to control billing to the user according to the provision of the service and cause information including a billing amount to be stored in the storage device; and
an allocated amount setting module configured to set, on the basis of the billing amount charged to the user according to the provision of the service, amounts to be allocated to a provider of the guidance-destination application used in the service and a provider of the guidance-source application guiding the user to the guidance-destination application.

6. A method for one or more than one computer to provide one or more than one service using an application to a user, the method comprising the steps of:
identifying a guidance-source application guiding the user to a guidance-destination application used in the service;
controlling billing to the user according to the provision of the service to store information including a billing amount; and
setting, on the basis of the billing amount charged to the user according to the provision of the service, amounts to be allocated to a provider of the guidance-destination application used in the service and a provider of the guidance-source application guiding the user to the guidance-destination application.
